(19) Europäisches Patentamt / European Patent Office / Office européen des brevets

(11) **EP 2 854 051 A2**

(12) **EUROPEAN PATENT APPLICATION**

(43) Date of publication:
**01.04.2015 Bulletin 2015/14**

(51) Int Cl.:
***G06F 17/50*** *(2006.01)*

(21) Application number: **14179655.7**

(22) Date of filing: **04.08.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.09.2013 JP 2013200867**

(71) Applicant: **FUJITSU LIMITED**
**Kawasaki-shi,**
**Kanagawa 211-8588 (JP)**

(72) Inventor: **Ogasawara, Keita**
**Kawasaki-shi, Kanagawa 211-8588 (JP)**

(74) Representative: **Ward, James Norman**
**Haseltine Lake LLP**
**Lincoln House, 5th Floor**
**300 High Holborn**
**London WC1V 7JH (GB)**

(54) **Simulation device, simulation program, and simulation method**

(57)     For first neighboring particles located within a radius of influence (302) of a reference particle (301) of a continuum model expressing a continuum as a collection of particles, a first interaction between the reference particle (301) and the first neighboring particle is calculated according to a kernel function and the position of the first neighboring particle after displacement of the continuum model. For second neighboring particles that have entered the radius of influence (302) of the reference particle (301) after the displacement occurred, a second interaction between the reference particle (301) and the second neighboring particle is calculated according to the kernel function and the position of the second neighboring particle after displacement of the continuum model. An interaction between the reference particle (301) and a current neighboring particle of the reference particle (301) is calculated according to the first and second interactions. The deformation gradient tensor of the kernel function is used to calculate the first interaction.

FIG. 2

EP 2 854 051 A2

**Description**

FIELD

The embodiments discussed herein are related to a simulation device, simulation program, and simulation method.

BACKGROUND

With the improvement on computer power in recent years, simulation techniques have also gradually developed. Consequently, simulations have been used in various fields of application.

As numerical calculation techniques of solving problems of continuums such as fluids and elastic bodies, a finite difference method, a finite element method, a finite volume method, and so on have been often used to determine an approximate solution of a differential equation on the basis of a lattice. In recent years, such numerical calculation techniques have been developed to utilize numerical calculations in fields of application such as the CAD (Computer Aided Engineering), thereby solving a problem of an interaction between a fluid and a structure.

However, in techniques that use a lattice, such as the finite element method and the finite volume method, when there is a problem of the presence of an interface such as a free surface or a problem of the occurrence of a moving boundary such as a fluid-structure interaction problem, such a problem needs to be dealt with in a complex way, and hence it is often difficult to create a program.

By contrast, in particle methods that do not use a lattice, such as the MPS (Moving Particle Semi-implicit or Moving Particle Simulation) method and the SPH (Smoothed Particle Hydrodynamics) method, a fluid for which calculations are performed is represented as a collection of particles, and special treatment does not need to be prepared to deal with a moving boundary. Thus, the particle methods have been widely used in recent years. In the techniques that express an analysis object using particle distribution, a particle located within a radius of influence (kernel radius) of a certain particle, i.e., located within a distance h from the certain particle, is defined as a neighboring particle and information thereon is used.

As an example, formula 1 expresses discretization of an equation of motion in the SPH method.

$$\frac{d\mathbf{v}_a}{dt} = -\sum_b m_b \left[ \left( \frac{P_b + P_a}{\rho_b \rho_a} \right) + \Pi_{ab} \right] \frac{\partial W(|\mathbf{r}_a - \mathbf{r}_b|, h)}{\partial \mathbf{r}_a} \qquad \cdots \text{Formula 1}$$

In formula 1, a subscript a indicates a certain particle, and a subscript b indicates a neighboring particle.

$r_a$, $v_a$, $\rho_a$, $P_a$, and $m_a$ respectively indicate the position vector, the rate vector, the density, the pressure, and the mass of the particle a.

W, a kernel function, is used to form a continuum field from particle distribution, and a function such as the following cubic spline function, formula 2, is often used.

$$W(r,h) = \begin{cases} \left( 1 - 1.5\left(\frac{r}{h}\right)^2 + 0.75\left(\frac{r}{h}\right)^3 \right)/\beta & 0 \le \frac{r}{h} < 1 \\ 0.25\left( 2 - \frac{r}{h} \right)^3 / \beta & 1 \le \frac{r}{h} < 2 \\ 0 & 2 \le \frac{r}{h} \end{cases}$$

$$\cdots \text{Formula 2}$$

For an element such as an elastic body, an acceleration is calculated by discretizing a deformation gradient tensor expressed by the following formula, formula 3.

$$F_{ij} = \frac{\partial u_i}{\partial X_j} + I \qquad \cdots \text{ Formula 3}$$

In formula 3, $X_j$ indicate a j component of the distance between positions; $u_i$, an i component of displacement; I, an identity tensor.

In the particle method, the deformation gradient tensor of a certain particle a may be expressed by the following formula, formula 4, by superimposing the influence of a neighboring particle b.

$$F_{ij}^a = -\sum_i \frac{m^b}{\rho^b} \left( du_i^a - du_i^b \right) \frac{\partial W(r,h)}{\partial x_j^b} + I \qquad \cdots \text{ Formula 4}$$

In formula 4, du indicates displacement.

However, using a kernel function based on a reference point eliminates an interaction when the distance between the relative positions of particles is equal to or greater than a radius of influence. Accordingly, the shape of the radius of influence needs to be changed in accordance with a deformation volume so as to maintain an interaction with a reference particle.

As disclosed in, for example, non-patent document 1, a technique is known wherein, in the analyzing of an element such as an elastic body, even after the initial calculation for a neighboring particle progresses and a particle position changes, that particle continues to be dealt with as a neighbor.

Patent document 1 discloses a technology for identifying a particle that interacts with other particles.

Patent document 2 discloses the following technology. To search for a particle that is a neighbor of certain distributed particles, the distances from all of the other particles would need to be determined, and a determination would need to be repeatedly made on whether a particle is a neighbor. However, particles distributed within a space are divided into two kinds : particles for which new attribute information is calculated by searching a neighboring particle; and particles for which new attribute information is calculated from attribute information thereof without searching a neighboring particle. Calculating processes corresponding to the two kinds of particles are performed, thereby decreasing the number of times a search of a neighboring particle is performed.

Patent document 3 discloses a technology wherein, in a functional calculus of a force or potential that corresponds to the distance between particles, a differential coefficient of a function is used to determine a new potential using an interpolation method.

Documents of Prior Art

Patent document 1: Japanese Laid-open Patent Publication No. 4-181350
Patent document 2: Japanese Patent No. 2929840
Patent document 3: Japanese Patent No. 3277799
Non-patent document 1: MINAKI Hiroyuki, NOGUCHI Hirohisa, "Investigation of Corrections of SPH for High Accuracy Analysis of Large Deformation Elasto-Plastic Problems", Collected Papers from 17th Computational-Dynamics Lecture Meeting by The Japan Society of Mechanical Engineers, pages 767-768, 2004

In the performing of a calculation using a reference neighboring particle, a value determined according to a distance for an initial position is identical with a value after deformation, but the derivative is not identical with the one for the initial position. Hence, to determine an interaction, a calculation needs to be performed after the initial position is converted into the reference position. Accordingly, a stress needs to be calculated as, for example, a Piola-Kirchhoff stress, namely, a stress value for the reference position.

However, in the aforementioned related arts, due to, for example, a contact problem wherein consideration cannot be given to the influence of the touching by a particle that has approached from a position that is not near a reference position, it is difficult to perform a calculation in consideration of stress values that work in the coordinates after deformation of an elastic body.

SUMMARY

In one viewpoint, an object of the present invention is to provide a simulation device, a simulation program, and a simulation method to allow calculations to be readily performed in consideration of stress values that work in the coordinates after deformation of an elastic body.

To solve the aforementioned problems, the invention uses the following configuration.

That is, one aspect of the invention provides a simulation program that causes a computer to: for each of one or more first neighboring particles located within a radius of influence of a reference particle of a continuum model expressing a continuum as a collection of particles, calculate a first interaction between the reference particle and the first neighboring particle according to a kernel function and the position of the first neighboring particle after displacement of the continuum model; for each of one or more second neighboring particles that have entered the radius of influence of the reference particle after the displacement occurred, calculate a second interaction between the reference particle and the second neighboring particle according to the kernel function and the position of the second neighboring particle after displacement of the continuum model; and calculate an interaction between the reference particle and a current neighboring particle of the reference particle according to the first and second interactions, wherein calculating the first interaction includes using the deformation gradient tensor of the kernel function.

BRIEF DESCRIPTION OF DRAWINGS

FIG. 1 illustrates an exemplary configuration of a simulation device to which the invention has been applied;
FIG. 2 is a flowchart illustrating the flow of a simulation process in accordance with a first embodiment;
FIG. 3 illustrates a change in a radius of influence that occurs in response to deformation of an elastic body;
FIG. 4 illustrates the state of particles indicated when an elastic body is largely deformed;
FIG. 5 illustrates a concept for use of two kinds of neighbors;
FIG. 6 illustrates the concept of a situation in which a self-contact calculation is performed;
FIG. 7 is a flowchart illustrating the flow of a simulation process in accordance with a second embodiment; and
FIG. 8 is the configuration diagram of an information processing apparatus.

DESCRIPTION OF EMBODIMENTS

The following will describe embodiments of the invention in detail with reference to the drawings.

The invention relates to a simulation device, a simulation program executed by a computer, and a simulation method, wherein a continuum that is an object of simulation is considered as a collection of particles.

The simulation device, the simulation program, and the simulation method of the invention are techniques of treating a neighboring particle in a numerical calculation program that uses a particle method. In particular, they are techniques of numerically calculating a motion of a continuum such as an elastic body using a particle method; more particularly, they are techniques wherein, in the treating of a neighboring particle, a Cauchy stress after deformation is determined while considering a neighboring particle with reference to a reference position, and a calculation is performed by combining the Cauchy stress with a neighbor after coordinate conversion.

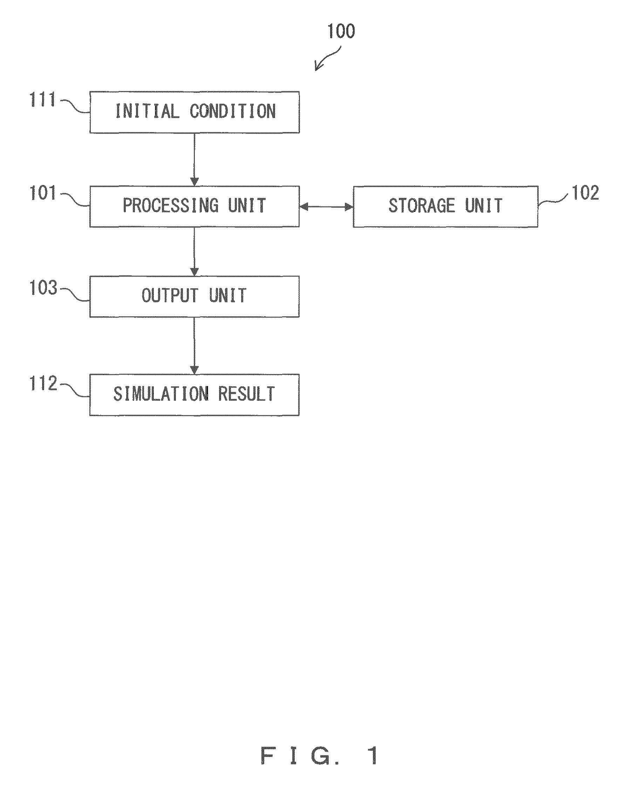

FIG. 1 illustrates an exemplary configuration of a simulation device to which the invention has been applied.

In FIG. 1, a simulation device 100 includes a processing unit 101, a storage unit 102 , and an output unit 103 , and outputs a simulation result 112 after performing a numerical calculation according to an initial condition 111 using a particle method.

The storage unit 102 stores information on individual calculating formulas for executing a simulation program to which the invention has been applied.

The processing unit 101 performs a simulation process to which the invention has been applied.

In the simulation process performed by the processing unit 101, for each of one or more first neighboring particles located within a radius of influence of a reference particle of a continuum model expressing a continuum as a collection of particles, a first interaction between the reference particle and the first neighboring particle is calculated according to a kernel function and the position of the first neighboring particle after displacement of the continuum model. In the simulation process, for each of one or more second neighboring particles that have entered the radius of influence of the reference particle after the displacement occurred, a second interaction between the reference particle and the second neighboring particle is calculated according to the kernel function and the position of the second neighboring particle after displacement of the continuum model. In addition, an interaction between the reference particle and a current neighboring particle of the reference particle is calculated according to the first and second interactions. Note that the deformation gradient tensor of the kernel function is used to calculate the first interaction.

The calculating of the interaction between the reference particle and the current neighboring particle in the simulation process allows the first and second interactions to be calculated at an optional ratio. The ratio of the calculations of the first and second interactions may be determined in accordance with the degree of displacement of the continuum model.

The output unit 103 outputs the simulation result 112 of a simulation performed by the processing unit 101.

In the simulation process to which the invention has been applied, in the treating of a neighboring particle with reference to a reference position, with the assumption that "in accordance with deformation of an elastic body, a radius of influence changes with deformation of particles of the elastic body", a correction term that uses a deformation gradient tensor, i.e., a parameter indicating the degree of deformation, is introduced into a kernel after the deformation, and the following formula (formula 5) is calculated.

$$\frac{\partial W(r,h)}{\partial x_j^b} = \left(\frac{\partial W(r,h)}{\partial x_k^b}\right)^{ini} \frac{\partial x_k^{b\,ini}}{\partial x_i^b} \times \frac{1}{\left|F^{a^{n-1}}\right|} \quad \cdots \text{ Formula 5}$$

A variable with a superscript ini is a value for a reference position, and $F^{a_{n-1}}$ is a deformation gradient tensor for an (n-1)-th step of a particle a.

Accordingly, using a kernel and a radius of influence for the reference position, an accurate value of the differentiation of the kernel after deformation of an elastic body may be determined, a Cauchy stress, i.e., a stress within the coordinate system after deformation, can be calculated, and a calculation with another stress within the current coordinate system may be readily performed.

When an elastic body is largely deformed, a contribution of a neighboring particle based on a neighbor of the reference position and a contribution of a neighboring particle based on a neighbor after deformation are used while changing these contributions at a certain ratio, with the result that consideration is given to, for example, the influence of the touching by a particle coming from a position that is not near the reference position, and a behavior at the time of large deformation of the elastic body is determined. A deformation gradient tensor may be used in a method for determining the ratio.

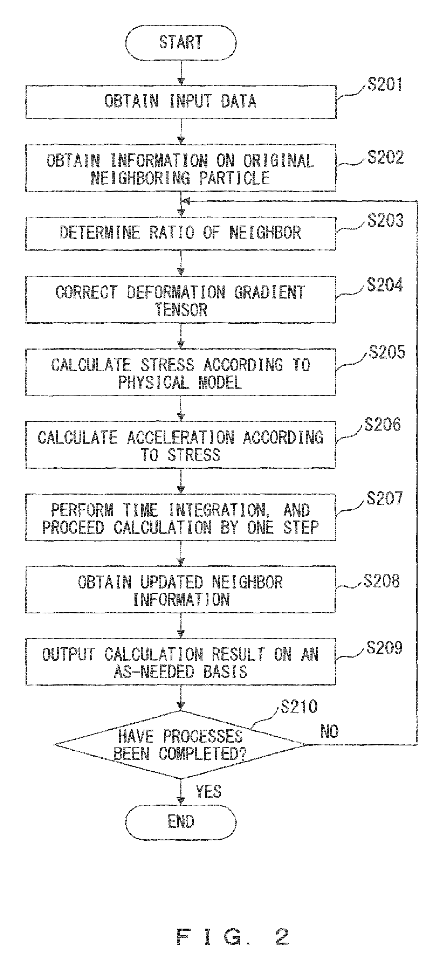

FIG. 2 is a flowchart illustrating the flow of a simulation process in accordance with a first embodiment.

First, in step S201, input data is obtained. The input data is data to express a continuum particle model that is, for example, a modeled elastic body. The input data are, for example, the central coordinates, traveling speeds, radiuses of influence (kernel radiuses), densities, masses, deformation gradient tensors, material property values, and material temperatures of individual particles.

In step S202, according to the central coordinates input in step S201, for each particle, information on a neighboring particle located within a predetermined distance from the particle is obtained and stored in a memory.

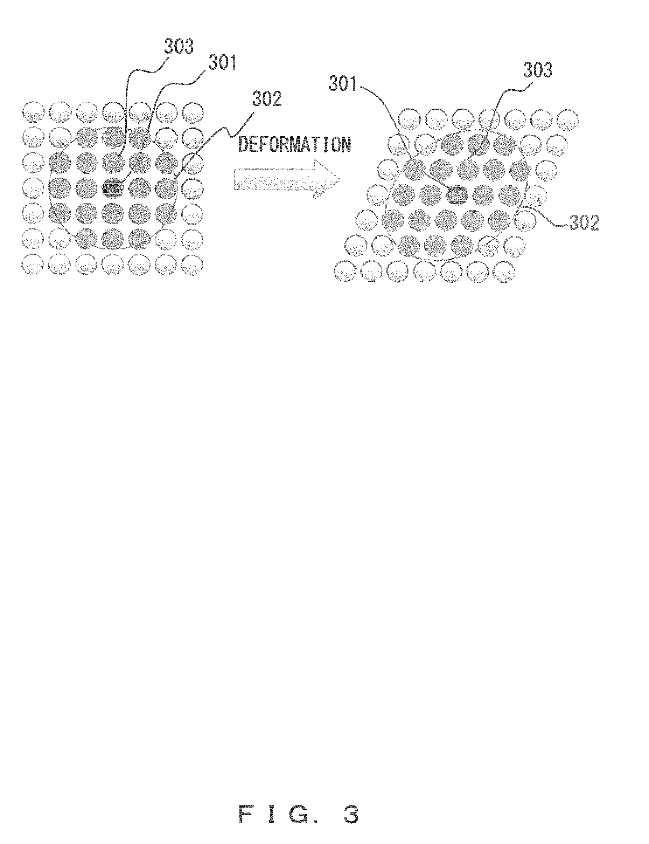

FIG. 3 illustrates a change in radius of influence that occurs in response to deformation of an elastic body.

In FIG. 3, a plurality of neighboring particles 303 are defined within a radius of influence 302 of a reference position that is an arbitrary particle that constitutes the elastic body (hereinafter may be referred to as a "reference particle 301"). Deformation of the elastic body results in deformation of the radius of influence 302.

As depicted in FIG. 3, with the assumption that the radius of influence 302 changes with deformation of the elastic body, when, for example, a distance between certain particles is extended by N times in a particular direction, the radius of influence may be supposed to be also extended by N times in that direction. In this case, the contributions of the volumes of the two particles to each other have the same values as values measured for the reference particle 301. Accordingly, in step S203 in FIG. 2, without deforming a kernel function under the supposition, the influence after deformation is calculated in accordance with a relative position of the reference particle 301 and the kernel function of the reference particle 301. However, the value of differentiation is not limited to that, and hence a correction is made using a correction term of formula 4, and a deformation gradient tensor for a certain step number n is indicated by the following formula, formula 6.

$$F_{ij}^{a^n} = -\sum_i \frac{m^b}{\rho^b}\left(du_i^a - du_i^b\right)\left(\frac{\partial W(r,h)}{\partial x_k^b}\right)^{ini} \frac{\partial x_k^{b\,ini}}{\partial x_i^b} \times \frac{1}{\left|F^{a^{n-1}}\right|} + I \quad \cdots \text{ Formula 6}$$

Accordingly, a deformation gradient tensor that uses a differentiation of the kernel function may be calculated without using a position after deformation, and a Cauchy stress may be calculated.

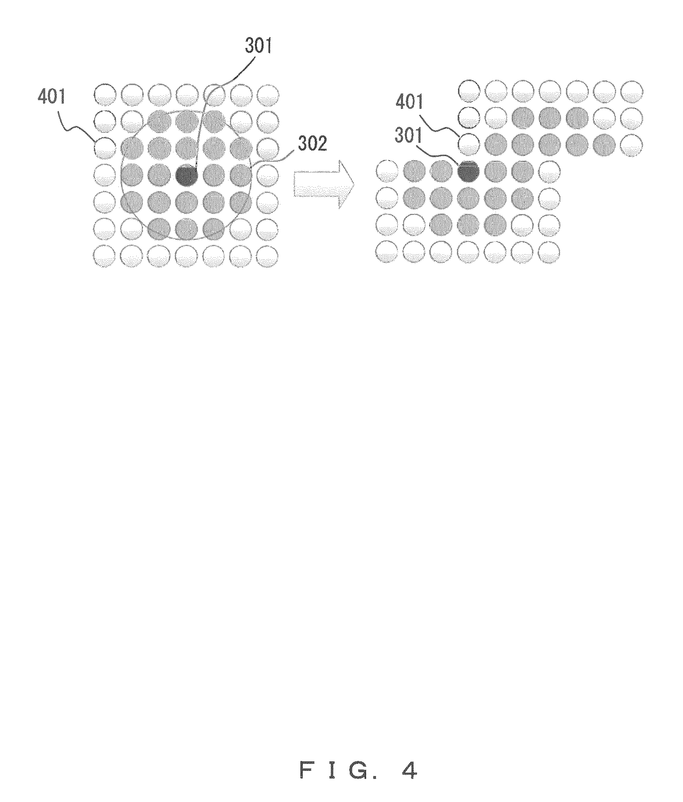

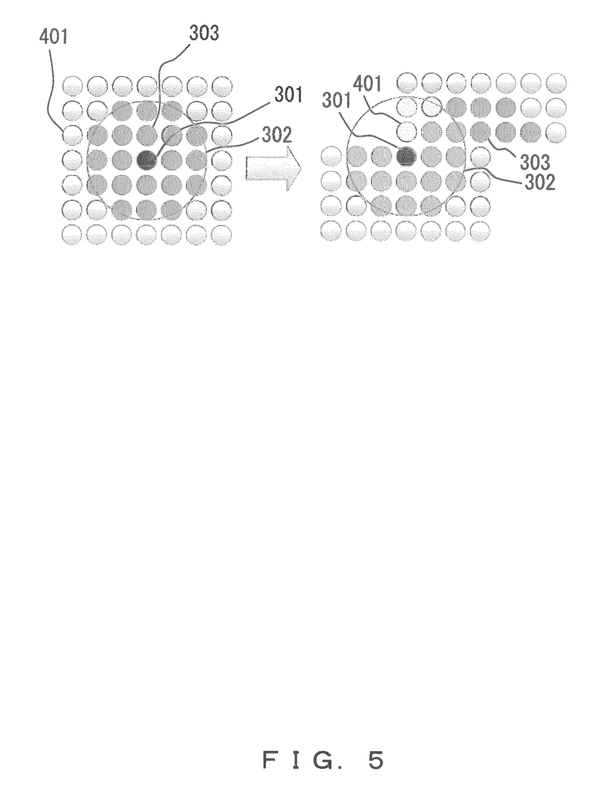

FIG. 4 illustrates the state of particles indicated when an elastic body is largely deformed. FIG. 5 illustrates a concept for use of two kinds of neighbors.

In the case of using the aforementioned technique, as deformation of an elastic body progresses, as illustrated in FIG. 4, when a particle initially located at a distant position (distant particle 401) comes very close to the reference particle 301, or even when these particles become overlapped with each other, these particles may have no influence on each other, and such a phenomenon does not appear to fit in with a real state.

Accordingly, in step S204, as depicted in FIG. 5, using the two kinds of situations , i.e., a situation wherein the reference particle 301 and a neighboring particle 303 are adjacent to each other from the beginning and a situation wherein the reference particle 301 and a distant particle 401 become adjacent to each other after the elastic body is largely deformed, these two kinds are overlapped with each other at a certain ratio. In the initial step, the amounts of the two influences are the same. The neighboring particle 303 in the process of being deformed may be defined as a reference that has a new influence, and three or more neighboring states may be overlapped with each other. Indicators for overlapping are, for example, the following.

When the volume of deformation from the reference particle 301 is small, the influence of the distant particle 401, i.e. , a particle initially located at a distant position, is supposed to be small, and hence relative-position coordinates of the particles, namely, one indicator for a deformation volume, may be used. As an example, using a radius of influence h and $x_{near}$, which indicates the relative-position coordinates of the neighboring particle 303 that is the closet to the reference particle 301 among the neighboring particles 303, a ratio P of the neighbor of the reference is determined as follows.

P=1 ($x_{near}$/2h<0.5)
P=$x_{near}$/2h (0.5□$x_{near}$/2h<1)
P=0.5 ($x_{near}$/2h>1)

In step S205, in accordance with a physical model set for an elastic body particle, the motion of the elastic body particle is solved, and a stress is determined.

In particular, for an elastic body, the following formulas, formulas 7, 8, and 9, are solved using the deformation gradient tensor determined according to formula 4 so as to calculate a Cauchy stress σ.

$$C = F^{-1} \cdot F \quad \cdots \quad \text{Formula 7}$$

$$E = \frac{1}{2}\left(C - I\right) \quad \cdots \quad \text{Formula 8}$$

$$\sigma = \frac{1}{j}\left( F \cdot \frac{\partial Q}{\partial E_{ij}} \cdot F^T \right) \quad \cdots \quad \text{Formula 9}$$

C indicates a right Cauchy-Green deformation tensor; E, a Green-Lagrange strain tensor; j, a rate of volumetric change (=|F|); Q, an elastic potential.

Well known elastic potentials include, for example, a Mooney-Rivlin potential indicated by formula 10.

$$Q = c_1\left(I_c - 3\right) + c_2\left(II_c - 3\right) \quad \cdots \quad \text{Formula 10}$$

In formula 10, $c_1$ and $c_2$ indicate Mooney-Rivlin parameters, and $I_c$ and $II_c$ indicate principal invariants of the right Cauchy-Green deformation tensor C.

$$I_c = trC \quad \cdots \text{ Formula 11}$$

$$II_C = \frac{1}{2}\left\{(trC)^2 - tr\left(C^2\right)\right\} \quad \cdots \text{ Formula 12}$$

In step S206, an acceleration is calculated using the Cauchy stress determined in accordance with the formulas up to formula 12.

$$\frac{D\mathbf{v}}{Dt} = -\frac{1}{\rho}\nabla \cdot \sigma \quad \cdots \text{ Formula 13}$$

In formula 13, $\sigma$ indicates a Cauchy stress tensor.

In step S207, using a time derivative term that includes the acceleration determined at the end, the physical quantity of the continuum particle is time-integrated, a calculation for one step is completed when the time elapses by a time unit.

In step S208, updated information on the neighboring particles 303 is obtained.

In step S209, a calculation result is output as an external file on an as-needed basis, e.g., when a certain number of steps have elapsed or when a certain simulation time has elapsed.

In step S210, it is determined whether a designated number of steps have been completed; when the designated number of steps have not been completed (step S210: No), step S203 and the following steps are repeated as many times as the designated number of steps, and, then, the simulation process in accordance with the first embodiment is finished.

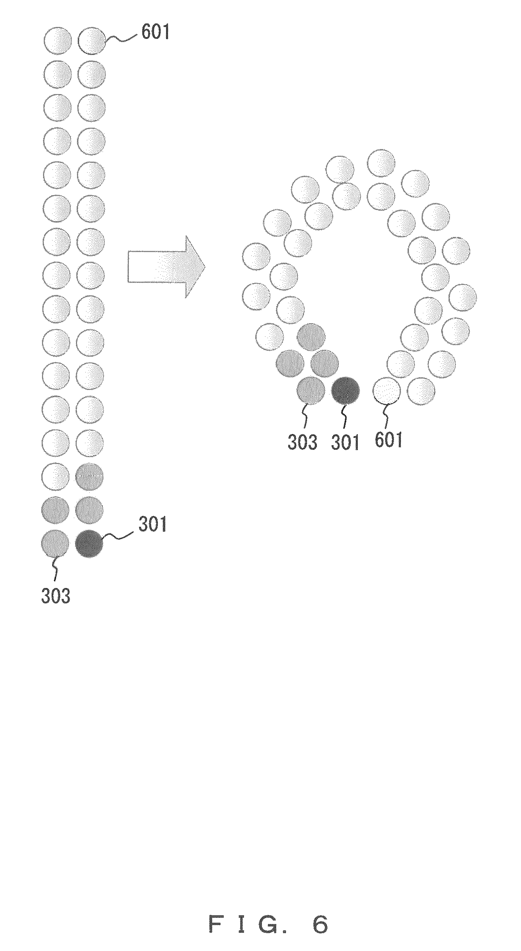

FIG. 6 illustrates the concept of a situation in which a self-contact calculation is performed.

To solve a self-contact problem, as illustrated in FIG. 6, for an original neighboring particle 303, the motion of a continuum body particle is solved as described above, and, for a neighboring particle 601 that has become a neighbor after the elastic body is deformed, a repulsive force is determined on the assumption that the reference particle 301 and the neighboring particle 601 have come in contact with each other. In this case, for both the original neighboring particle and the particle that has become a neighbor after deformation occurred, or for a neighboring particle 303 that was originally adjacent but is no longer adjacent, different influences may be given at a certain ratio, as described above. A penalty method or the like may be used to calculate the repulsive force. In this case, the influences are different factors such as the motion and the contact of the elastic body, and hence the ratio of the influences does not need to be changed.

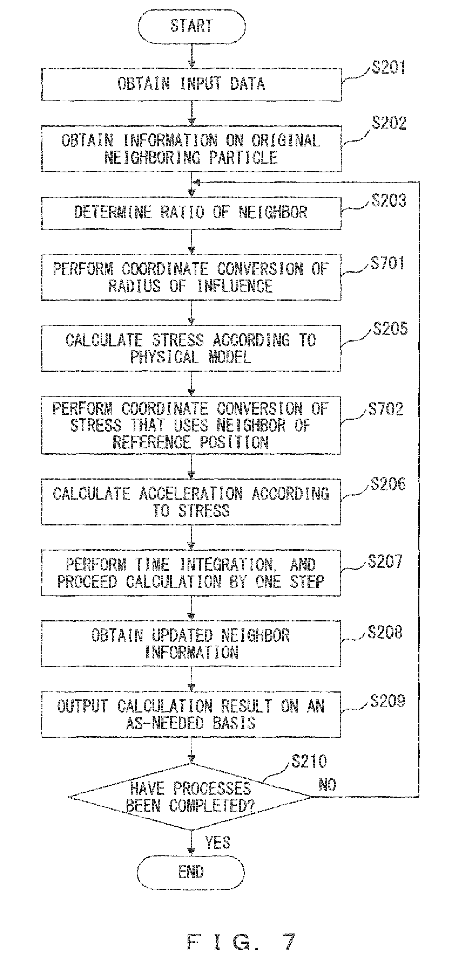

FIG. 7 is a flowchart illustrating the flow of a simulation process in accordance with a second embodiment.

In the simulation process of the second embodiment, coordinate conversion is performed to determine a radius of influence with reference to reference coordinates without using formula 5, which is used in the simulation process of the first embodiment.

Steps S201-S203 are similar to those in the simulation process of the first embodiment.

In the case of using reference coordinates, the coordinate system is based on initial positions. Accordingly, in step S701, a radius of influence 302 is converted into a radius of influence 302 tailored for the reference coordinates. Formula 14 expresses the radius of influence 302, where F indicates a deformation gradient tensor.

$$W_f(r,h) = (\det F)F^{-1} \; W(r,h) \; F \quad \cdots \text{ Formula 14}$$

In formula 14, $W_f(r,h)$ indicates a radius of influence specific to a situation in which a reference coordinate system is used.

In step S205, as in the case of the first embodiment, a stress is calculated using both an original neighboring particle 303 and a particle 303 that has become a neighbor after deformation occurred. A calculating formula that is essentially the same as that in the first embodiment is used, but a deformation gradient tensor that has not been corrected is used. Hence, the stress is the one based on the reference coordinate system, which is a first Piola-Kirchhoff stress.

Meanwhile, when an original radius of influence 302 and a radius of influence 302 after deformation are overlapped, these two radiuses of influence cannot be simply overlapped because a stress determined by solving a similar formula at the current coordinate system and a stress for which contact is considered are Cauchy stresses that are stress values of the current coordinate system.

Accordingly, in step S702, using formula 15, a calculation is performed after the stresses are converted into stresses that use the reference coordinate system.

$$\sigma = \frac{1}{(\det F)} F \cdot \Pi \cdot F^{-1} \qquad \cdots \text{Formula 15}$$

$\sigma$: Cauchy stress, $\Pi$: first Piola-Kirchhoff stress

Step S206 and the following steps are similar to those in the first embodiment.

As described above, the embodiments of the invention can be widely used for numerical calculations that use a particle method. The embodiments can be used to, for example, design a product by analyzing a casting process. Applying any of the embodiments to an elastic body may allow, for example, the shape of sealing gel to be properly determined in the designing of a product.

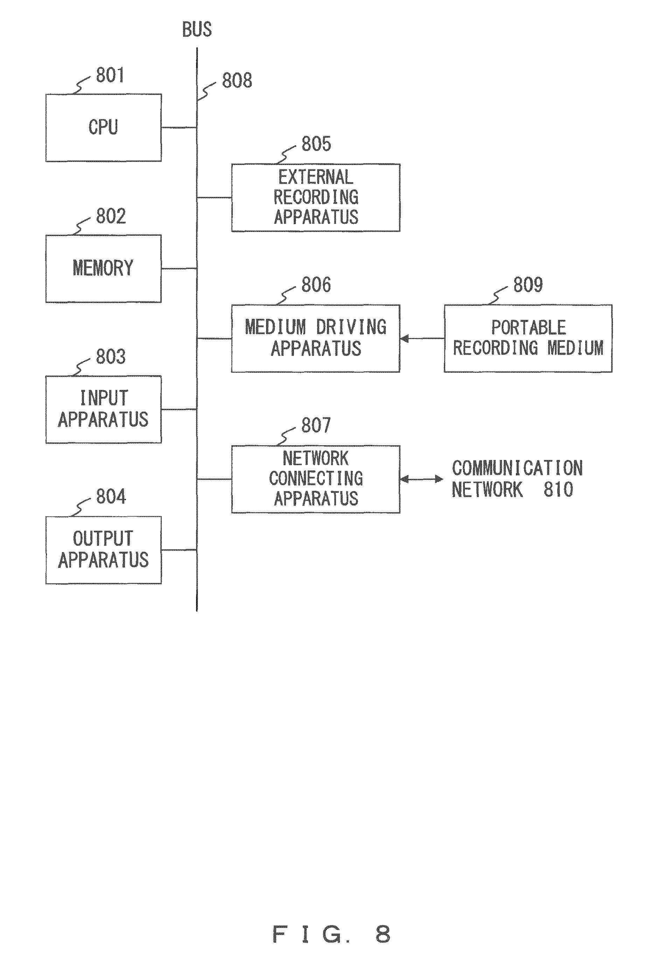

The simulation apparatus in FIG. 1 is achievable using, for example, an information processing apparatus (computer) illustrated in FIG. 8. The information processing apparatus in FIG. 8 includes a CPU (Central Processing Unit) 801, a memory 802, an input apparatus 803, an output apparatus 804, an external recording apparatus 805, a medium driving apparatus 806, and a network connecting apparatus 807. These elements are connected to each other by a bus 808.

The memory 802 is a semiconductor memory, e.g., a ROM (Read Only Memory), a RAM (Random Access Memory), or a flash memory, and stores a program and data used in the simulation processes. As an example, the CPU 801 performs the aforementioned simulation processes by executing a program using the memory 802. The memory 802 may be used as the storage unit 102 in FIG. 1.

The input apparatus 803 is, for example, a keyboard or a pointing device and is used to input information and an instruction from an operator. The output apparatus 804 is, for example, a display apparatus, a printer, or a speaker and is used to output a result of processing and to send a query to an operator. The output apparatus 804 may be used as the output unit 103 in FIG. 1.

The external recording apparatus 805 is, for example, a magnetic disk apparatus, an optical disk apparatus, a magnetic optical disk, or a tape apparatus. The external recording apparatus 805 includes a hard disk drive. The information processing apparatus may store a program and data in the external recording apparatus 805 and may load them into the memory 802.

The medium driving apparatus 806 drives a portable recording medium 809 and accesses data recorded therein. The portable recording medium 809 is, for example, a memory device, a flexible disk, an optical disk, or a magnetic optical disk. The portable recording medium 809 also includes, for example, a Compact Disk Read Only Memory (CD-ROM), a Digital Versatile Disk (DVD), and a Universal Serial Bus (USB) memory. The operator may store a program and data in the portable recording medium 809 and load them into the memory 802.

As described above, the computer-readable recording media that store a program and data used in the simulation process include physical (non-transitory) recording media such as the memory 802, the external recording apparatus 805, and the portable recording medium 809.

The network connecting apparatus 807 is a communication interface connected to a communication network 810 and performs data conversion associated with a communication. The information processing apparatus may receive a program and data from an external apparatus via the network connecting apparatus 807 and load them into the memory 802. The network connecting apparatus 807 may be used as the output unit 103 in FIG. 1.

Although the disclosed embodiments and advantages thereof have been described in detail, those skilled in the art will make various changes, add elements, and omit elements without departing from the scope of the invention clarified in the claims.

In the embodiment, a deformation gradient tensor may be used to calculate an interaction for which consideration is given to the fact that a radius of influence is supposed to change in accordance with deformation caused by movement of a particle, a Cauchy stress may be calculated that is a stress value under coordinates after deformation, and the calculation of an interaction with a particle that has become a neighbor after deformation occurred may be combined, thereby allowing, for example, a self-contact problem to be solved. In particular, in the case of dealing with an elastic body, a deformation gradient tensor is often used to indicate the behavior of the elastic body; using a deformation gradient tensor leads to the advantages that values can be calculated without performing a special calculation and that values can be calculated without particularly increasing a calculation amount.

**Claims**

1. A non-transitory computer-readable recording medium having stored therein a program for causing a computer to execute a process comprising:

for each of one or more first neighboring particles located within a radius of influence (302) of a reference particle (301) of a continuum model expressing a continuum as a collection of particles, calculating a first interaction between the reference particle (301) and the first neighboring particle according to a kernel function and a position of the first neighboring particle after displacement of the continuum model;
for each of one or more second neighboring particles that have entered the radius of influence (302) of the reference particle (301) after the displacement occurred, calculating a second interaction between the reference particle (301) and the second neighboring particle according to the kernel function and a position of the second neighboring particle after displacement of the continuum model; and
calculating an interaction between the reference particle (301) and a current neighboring particle of the reference particle (301) according to the first and second interactions, wherein
the calculating of the first interaction includes using a deformation gradient tensor of the kernel function.

2. The recording medium according to claim 1, wherein
the calculating of the interaction between the reference particle (301) and the current neighboring particle of the reference particle (301) includes calculating a calculation result of the first interaction and a calculation result of the second interaction at an optional ratio.

3. The recording medium according to claim 2, wherein
the ratio of the calculations of the calculation results of the first and second interactions is determined in accordance with a degree of displacement of the continuum model.

4. A simulation method that is executed by a simulation device (100), the simulation method comprising:

for each of one or more first neighboring particles located within a radius of influence (302) of a reference particle (301) of a continuum model expressing a continuum as a collection of particles, calculating a first interaction between the reference particle (301) and the first neighboring particle according to a kernel function and a position of the first neighboring particle after displacement of the continuum model;
for each of one or more second neighboring particles that have entered the radius of influence (302) of the reference particle (301) after the displacement occurred, calculating a second interaction between the reference particle (301) and the second neighboring particle according to the kernel function and a position of the second neighboring particle after displacement of the continuum model; and
calculating an interaction between the reference particle (301) and a current neighboring particle of the reference particle (301) according to the first and second interactions, wherein
the calculating of the first interaction includes using a deformation gradient tensor of the kernel function.

5. The simulation method according to claim 4, wherein
the calculating of the interaction between the reference particle (301) and the current neighboring particle of the reference particle (301) includes calculating a calculation result of the first interaction and a calculation result of the second interaction at an optional ratio.

6. The simulation method according to claim 5, wherein
the ratio of the calculations of the calculation results of the first and second interactions is determined in accordance with a degree of displacement of the continuum model.

7. A simulation device (100), comprising:

a first-interaction calculating unit (101) configured to, for each of one or more first neighboring particles located within a radius of influence (302) of a reference particle (301) of a continuum model expressing a continuum as a collection of particles, calculate a first interaction between the reference particle (301) and the first neighboring particle according to a kernel function and a position of the first neighboring particle after displacement of the continuum model;

a second-interaction calculating unit (101) configured to, for each of one or more second neighboring particles that have entered the radius of influence (302) of the reference particle (301) after the displacement occurred, calculate a second interaction between the reference particle (301) and the second neighboring particle according to the kernel function and a position of the second neighboring particle after displacement of the continuum model; and

an interaction calculating unit (101) configured to calculate an interaction between the reference particle (301) and a current neighboring particle of the reference particle (301) according to the first interaction calculated by the first-interaction calculating unit (101) and the second interaction calculated by the second-interaction calculating unit (101), wherein

the first-interaction calculating unit (101) calculates the first interaction using a deformation gradient tensor of the kernel function.

8. The simulation device (100) according to claim 7, wherein
the interaction calculating unit (101) calculates a calculation result of the first interaction calculated by the first-interaction calculating unit (101) and a calculation result of the second interaction calculated by the second-interaction calculating unit (101) at an optional ratio.

9. The simulation device (100) according to claim 8, wherein
the ratio of the calculations of the calculation result of the first interaction calculated by the first-interaction calculating unit (101) and the calculation result of the second interaction calculated by the second-interaction calculating unit (101) is determined in accordance with a degree of displacement of the continuum model.

100

| 111 | INITIAL CONDITION |
| --- | --- |

| 101 | PROCESSING UNIT | | STORAGE UNIT | 102 |
| --- | --- | --- | --- | --- |

| 103 | OUTPUT UNIT |
| --- | --- |

| 112 | SIMULATION RESULT |
| --- | --- |

F I G. 1

START

OBTAIN INPUT DATA — S201

OBTAIN INFORMATION ON ORIGINAL NEIGHBORING PARTICLE — S202

DETERMINE RATIO OF NEIGHBOR — S203

CORRECT DEFORMATION GRADIENT TENSOR — S204

CALCULATE STRESS ACCORDING TO PHYSICAL MODEL — S205

CALCULATE ACCELERATION ACCORDING TO STRESS — S206

PERFORM TIME INTEGRATION, AND PROCEED CALCULATION BY ONE STEP — S207

OBTAIN UPDATED NEIGHBOR INFORMATION — S208

OUTPUT CALCULATION RESULT ON AN AS-NEEDED BASIS — S209

HAVE PROCESSES BEEN COMPLETED? — S210

NO

YES

END

F I G. 2

F I G. 3

F I G. 4

F I G. 5

F I G. 6

START

OBTAIN INPUT DATA — S201

OBTAIN INFORMATION ON ORIGINAL NEIGHBORING PARTICLE — S202

DETERMINE RATIO OF NEIGHBOR — S203

PERFORM COORDINATE CONVERSION OF RADIUS OF INFLUENCE — S701

CALCULATE STRESS ACCORDING TO PHYSICAL MODEL — S205

PERFORM COORDINATE CONVERSION OF STRESS THAT USES NEIGHBOR OF REFERENCE POSITION — S702

CALCULATE ACCELERATION ACCORDING TO STRESS — S206

PERFORM TIME INTEGRATION, AND PROCEED CALCULATION BY ONE STEP — S207

OBTAIN UPDATED NEIGHBOR INFORMATION — S208

OUTPUT CALCULATION RESULT ON AN AS-NEEDED BASIS — S209

HAVE PROCESSES BEEN COMPLETED? — S210    NO

YES

END

F I G. 7

BUS

801

CPU

808

805

EXTERNAL
RECORDING
APPARATUS

802

MEMORY

806

809

MEDIUM DRIVING
APPARATUS

PORTABLE
RECORDING MEDIUM

803

INPUT
APPARATUS

807

NETWORK
CONNECTING
APPARATUS

COMMUNICATION
NETWORK   810

804

OUTPUT
APPARATUS

F I G.  8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4181350 A
- JP 2929840 B
- JP 3277799 B

**Non-patent literature cited in the description**

- Investigation of Corrections of SPH for High Accuracy Analysis of Large Deformation Elasto-Plastic Problems. **MINAKI HIROYUKI ; NOGUCHI HIROHISA.** Collected Papers from 17th Computational-Dynamics Lecture Meeting. The Japan Society of Mechanical Engineers, 2004, 767-768